# EUROPEAN PATENT APPLICATION

(11) **EP 2 826 838 A1**
(43) Date of publication of application: **21.01.2015**
(21) Application number: 13177164.4
(22) Date of filing: 19.07.2013
(51) Int. Cl.: C09K 21/04

(54) **Flame retardant composition for absorbent materials**

(71) Applicant: PKI Supply A/S, 7000 Fredericia (DK)
(72) Inventor: Thomsen, Hans Bay, 8700 Horsens (DK); Nielsen, Rasmus Honoré, 5260 Odense S (DK)
(74) Representative: Zacco Denmark A/S

(57) **Abstract**

The invention concerns a flame retardant composition for imparting flame retardancy in absorbent material.

## Description

### Field of the invention

The invention concerns a flame retardant composition for imparting flame retardancy in absorbent material.

### Background of the invention

The demand for fire safe goods/materials, are constantly increasing. Fire safety regulations for many types of goods have caused many manufacturers to make their goods with flame retardant properties. In efforts to comply with these regulations, many manufacturers apply fire retardant chemical compositions to their goods. Unfortunately, many fire retardant chemical compositions are known to contain ingredients that may be toxic to humans and the environment.

Today, the mostly used fire retardant chemical compositions are harmful. Harmful fire resistant compositions include halogenated compositions, especially bromine flame retardants (BFRs) and chlorinated flame retardants (CFRs) which have been used for over 30 years, but it has recently been found that levels of these substances are probably rapidly building up inside the bodies of humans. Among others, have BFRs been linked to cancer, immune suppression, and neurobehavioral and developmental effects.

In the building industry it is also very important to impart the building materials with flame retardant properties to live up to the standards in this area, especially European standard EN13501-1 fire test and FTPC part 5 & 6 / IMO A653(16) fire tests. The flame retardant used to impart flame retardant properties should not impart any hazards to the people working with and using the flame retardant building materials or the people living in the buildings after they have been build. In addition, the flame retardant composition should be chemically compatible with all the other used building materials e.g. glue, painting, varnish, lacquer, polish and other surface treatment materials.

EP0873768 disclose an aqueous extinguishing composition for use in a foam or water spray extinguisher used to extinguish fires in Class A (solid absorbent materials such as cloth, paper, wood). The composition disclose from 5 to 25% of a combustion inhibitor e.g. ammonium sulphate, 10 to 30% of an AFFI (aqueous film forming foam) emulsifier comprising at least a fluorinated surfactant, from 1 to 7% of citric acid, from 5 to 20% of urea and from 2 to 15% of ethylene glycol or propylene glycol.

EP1984437 disclose an organic chemical composition disclosing an ammonium sulphate, a source of citrate ion and a source of benzoate ion. Whereas this composition has good fire retardant properties, it is, however not easy to apply to surfaces of materials as it has problems of adherence to some materials.

There is a need for effective non-halogenated flame retardants that are not harmful to neither humans nor the environment, which absorb quickly and easy into absorbent materials.

### Summary of the invention

In a first aspect the present invention relates to a flame retardant composition for imparting flame retardancy in absorbent material, comprising:
- At least one combustion inhibitor comprising ammonium phosphate;
- At least one surfactant selected from the group consisting of alcohol, glycol and mixtures thereof;
- A Brønsted acid;
wherein the amount of the at least one surfactant in the composition range from 0.01 to 5 wt%.

In a second aspect the present invention relates to a method of imparting flame retardancy to an absorbent material, comprising applying a composition according to the present invention to the absorbent material.

The invention also, in a third aspect, relates to a fire resistant material comprising the composition according to the present invention.

### Detailed description of the invention

In the following description, specific details will be provided to give a thorough understanding of the present invention. As will be evident to one skilled in the art, however, the exemplary embodiments may be practiced without these specific details.

The present invention relates to flame retardant composition for imparting flame retardancy in absorbent material, comprising:
- At least one combustion inhibitor comprising ammonium phosphate;
- At least one surfactant selected from the group consisting of alcohol, glycol and mixtures thereof;
- A Brønsted acid.
The amount of the at least one surfactant in the composition may range from 0.01 to 5 wt%.

The absorbent material can be any absorbent material such as wood, e.g. plywood or chipboard, MDF building panels, OSB building panels, foam or isolation material such as Rockwool or paper wool, textiles, e.g. leather and cotton, furniture and absorbent plastics.

The present composition will penetrate the absorbent material which means that the application of the composition onto the material can be conducted very efficient and fast as the composition quickly will penetrate the absorbent material. A big advantage of the present composition is also that it can be used in combination with glue. This means that the present flame retardant composition e.g. can be applied to every single layer of ply wood (a standard ply wood comprise of 18 layers) followed by gluing the several layers together afterwards - giving a homogenous flame retardant plywood building material since the composition is even distributed throughout the material. The present flame retardant composition can e.g. also be added to the absorbent material during the manufacturing of the absorbent material. The absorbent material can be chipboard, MDF building panels, OSB building panels. The composition is mixed together with the fibers making up the absorbent material and the composition is preferably mixed together (by mechanical mixing) with the fibers making up the absorbent material before the glue is added to the mixture. This will give a homogenous flame retardant building material since the composition is even distributed throughout the material.

The ammonium phosphate can be inorganic ammonium phosphate or organic ammonium phosphate. Preferably the ammonium phosphate is an inorganic ammonium phosphate. The ammonium phosphate can be monoammonium or diammonium phosphate such as monoammonium orthophosphate or diammonium orthophosphate or ammonium polyphosphate. The combustion inhibitor may also comprise ammonium sulphates, ammonium nitrates or ammonium salts comprising alkali metal ions such as sodium or potassium or mixtures of the above. In one embodiment, where the ammonium phosphate is an organic ammonium phosphate, the one or more hydrogen atom(s) of phosphoric acid are replaced by an organic group such as methyl, ethyl phenyl.

In one embodiment the at least one combustion inhibitor comprising ammonium phosphate is present in the composition in the amount of up to 95 wt%.

Although a wide range of concentration of the at least one combustion inhibitor comprising ammonium phosphate can be included, the at least one combustion inhibitor comprising ammonium phosphate preferably makes up to 95 wt% of the composition when the composition is solid or a granulate composition. More preferably, the at least one combustion inhibitor comprising ammonium phosphate is in the range of from 40 to 95 wt%, from 60 to 95 wt%, from 70 to 95 wt%, from 80 to 95 wt%, or from 80 to 90 wt% and most preferably, the at least one combustion inhibitor comprising ammonium phosphate is in the range of from 80 to 85 wt% of the composition when the composition is solid or a granulate composition. It is contemplated that these ranges may shift depending on the type of the at least one combustion inhibitor comprising ammonium phosphate. In one embodiment the combustion inhibitor consists of only ammonium phosphate whereas in another embodiment the combustion inhibitor, in addition to the ammonium phosphate, comprise of a number of other ammonium salts such as ammonium sulphates, ammonium nitrates or ammonium salts comprising alkali metal ions such as sodium or potassium.

The combustion inhibitor will decompose under endothermic conditions. This decomposition reaction inhibits the chain reaction of the combustion and therefore significantly reduces emission.

The acid in the present composition is a Brønsted acid. Preferably, the acid is included/added to regulate the pH level of the composition such that the fire retardant properties of the combustion inhibitor comprising ammonium phosphate are enhanced. Although the pH can vary throughout a wide range, the pH of the composition is preferably below pH 7. In one embodiment the pH is in the range of about 4 to 6.8, more preferably about 5 to 6.5. In some embodiments, the pH is just below 7. In one embodiment the acid is added to the composition in an amount to achieve a pH level below 7. The acid can be of any suitable type. For example, acetic acid, or smaller amounts of stronger acids (i.e., hydrochloric). In some embodiments, the acid is a carboxylate. Preferably, a carboxylate is used that provides a source of citrate ion. Citric acid may be an especially suitable material, as it is a relatively gentle acid. The amount of acid will depend on the type of the acid used and can vary throughout a wide range. As mentioned above the acid is included/added to regulate the pH level of the composition such that the fire retardant properties of the combustion inhibitor comprising ammonium phosphate are enhanced.

The present composition comprises at least one surfactant comprising an alcohol and/or glycol, preferably in the range from 0.01 to 5 wt%. The presence of this surfactant is important to reduce the surface tension of the liquid composition when applied to a material. It allows the composition to penetrate solid and therefore works as a wetting agent. This is especially important in the present invention as the composition is meant for imparting flame retardancy in absorbent material and therefore has to penetrate easy into the material. Preferably, the surfactant makes up about 0.01 to 2 wt% of the composition. More preferably, the surfactant makes up about 0.5 to 1.5 wt% of the composition, and most preferably, it makes up about 1 wt% of the composition. In one embodiment the surfactant is an alcohol such as ethoxylated alcohol. In one embodiment the surfactant is a glycol such as ethylene or propylene. In one embodiment the surfactant is a mixture of the above listed alcohols and/or glycols. Even though the surfactant is added as a liquid, the finished composition can still be powder as the amount of added surfactant is very small compared to the rest of the composition.

In one embodiment the composition further comprise a defoamer. The defoamer is preferably present in the amount of from 0.05 to 1.0 wt%. More preferably, the defoamer makes up about from 0.05 to 0.5 wt% or from 0.05 to 0.3 wt% of the composition, and most preferably, it makes up about 0.1 to 0.3 wt% of the composition.

In one embodiment the defoamer is an emulsified petroleum. The defoamer reduces the amount of foam created by the presence of CO₂ especially during the mixing phase when an aqueous solvent is mixed with the composition. Even though the defoamer is added as a liquid, the finished composition can still be powder as the amount of added defoamer is very small compared to the rest of the composition.

In one embodiment the composition further comprises a thickening agent. The thickening agent is preferably present in the amount of 0.1 to 15 wt%. More preferably, the thickening agent makes up about from 0.5 to 10 wt%, or from 1.0 to 10 wt%, or from 2 to 10 wt% of the composition, and most preferably, it makes up about from 5 to 10 wt% of the composition. The thickening agent can be starch, carboxymethyl cellulose (CMC), polyvinyl alcohols (PVA) or polyvinyl acetates (PVAc). The amount of thickening agent imparts the viscosity of the composition.

It is important that the composition has a low viscosity when the composition is applied as a liquid through nozzles onto the absorbent material. When the composition is applied as a liquid through nozzles onto the absorbent material the thickening agent is left out of the composition. The viscosity is preferably between 1 to 100 mPas at 20°C when the composition is applied as a liquid through nozzles. The viscosity is in one embodiment around 1 mPas at 20°C when the composition is applied as a liquid through nozzles.

It is on the other hand important that the viscosity is high when the composition is applied as a thick liquid by use of roller application onto the absorbent material. When the composition is applied as a thick liquid by use of roller application onto the absorbent material the thickening agent is preferably added to the composition in amount as specified above. The viscosity is preferably between 500 and up to 10000 mPas at 20°C when the composition is applied as a thick liquid by use of roller application. The viscosity is in one embodiment between 800 and 1000 mPas at 20°C when the composition is applied as a thick liquid by use of roller application.

In one embodiment the composition further comprises a filler. The filler is preferably present in the amount of 0.5 to 20 wt%. More preferably, the filler makes up about from 1.0 to 15 wt%, or from 1.0 to 10 wt%, or from 2 to 10 wt% of the composition, and most preferably, it makes up about 2 to 6 wt% of the composition. The filler is preferably a carbonate, kaolinite or aluminium trihydrate. If the filler is carbonate, the acid in the composition will react with the carbonate to form CO₂.

In one embodiment the composition further comprises a preservative. The preservative is preferably present in the amount of 0.02 to 5 wt%. More preferably, the preservative makes up about 0.02 to 1.5 wt% of the composition, and most preferably, it makes up about 0.1 to 1.0 wt% of the composition. The preservative is added to prevent growth of bacteria or mold during transport and/or storage of the composition. Any suitable preservative can be used to serve this purpose. In one embodiment the preservative is a benzoate ion e.g. a benzoic acid. In one embodiment the preservative is sodiumbenzoate. In one embodiment the preservative is a food approved preservative.

The composition of the present invention is in one embodiment a solid.
The composition of the present invention is in one embodiment a granulate.
The composition of the present invention is in one embodiment a powder.

All the above listed wt% of the ingredients in the composition is wt% of the composition when it is solid, granulate or a powder.

In one embodiment the composition further comprises an aqueous solvent.

The composition of the present invention can therefore in one embodiment be a liquid composition. The solid or granulate composition can be mixed with a liquid solvent, preferably an aqueous solvent and the other composition ingredients are dissolved in the aqueous solvent.

The aqueous solvent can be any type of solvent that comprises water. For example, the aqueous solution may be tap water or distilled water. For those embodiments that include an aqueous solvent, the solvent preferably makes up between about 50% and about 95% of the liquid composition. More preferably the aqueous solvent makes up about 60% to 90%, and most preferably it makes up about 65% to about 75% of the liquid composition.

The composition is preferably sold as a solid or a granulate. The composition is preferably in a liquid form when it is being used. However, an aqueous solvent can be added to the composition at any time, including after the composition is purchased by a consumer.

In one embodiment the invention provides a composition that is 100% organic. In one embodiment the composition of the present invention consist of ingredients that are not harmful to neither living species nor the environment. The composition preferably contains no halogens.

The present invention also relates to a method of imparting flame retardancy to an absorbent material, comprising applying a composition according to the present invention to an absorbent material.

In one embodiment, the chemical composition is applied to a surface of an absorbent material to provide fire resistant properties to the material.

By applying the chemical composition onto the surface of an absorbent material - a material that has fire resistant properties is provided. The absorbent material can be any absorbent material such as wood, e.g. plywood, foam or isolation material such as Rockwool or paper wool.

In one embodiment of the method, the applied composition is the composition that comprises an aqueous solvent where the liquid composition is applied to the absorbent material by use of roller application. A variety of different rollers can be used to apply the present composition by use of roller application to be able to control the applied amount of composition. A smooth or grooved roller is preferably used.

In one embodiment of the method, the applied composition is the composition that comprises an aqueous solvent where the liquid composition is sprayed onto the absorbent material. In one embodiment the spraying is conducted by use of nozzles.

In one embodiment of the method the composition is added to the absorbent material during the manufacturing of the absorbent material. The absorbent material can be chipboard, MDF building panels, OSB building panels. The composition preferably has a low viscosity. The composition is mixed together with the fibres making up the absorbent material. The composition is preferably mixed together with the fibres making up the absorbent material just before the glue is added to the mixture. All the components are mixed, preferably by mechanical mixing by two screw conveyer.

The present invention also relates to a fire resistant material comprising the composition according to the present invention. The flame retarded material can be wood, such as plywood or chipboard, MDF building panels, OSB building panels, foam or isolation material such as Rockwool or paper wool.

The present invention also relates to a method of manufacturing a fire resistant material, said material comprising the composition according to the present invention. The flame retarded material can be wood, such as plywood or chipboard, MDF building panels, OSB building panels, foam or isolation material such as Rockwool or paper wool. In one embodiment the method of manufacturing a fire resistant material comprises applying a composition according to the present invention to an absorbent material. In one embodiment the chemical composition is applied to a surface of an absorbent material. In one embodiment the liquid composition is applied to the absorbent material by use of roller application. In one embodiment the liquid composition is sprayed onto the absorbent material. In one embodiment the spraying is conducted by use of nozzles. In one embodiment the composition is added to the absorbent material during the manufacturing of the fire resistant absorbent material. The composition is mixed together with the fibres making up the absorbent material. The composition is preferably mixed together (by mechanical mixing) with the fibres making up the absorbent material before the glue is added to the mixture.

The composition of the present invention can be manufactured in many possible ways. The ingredients can be mixed in any suitable way. In the following one way of mixing the ingredients of the composition is discussed. This is merely for illustrative purposes and a person skilled in the art will realize that many other ways of mixing the components are possible. The at least one combustion inhibitor comprising ammonium phosphate and the acid is mixed until the ingredients are thoroughly mixed together. The at least one surfactant comprising an alcohol and/or glycol can be added next and mixed until all of the ingredients are thoroughly mixed together. If the composition comprises additional ingredients they can be added as well to the mixture and thoroughly mixed together with the main ingredients. The composition is now ready to be sold or stored in this granular or powder form. At any desired time, the granular or powder mixture can be dissolved in aqueous solvent. This is only one example as to how the ingredients can be combined, and it will be apparent to one skilled in the art that there exist numerous other mixing methods that can be used.

In the following one specific formula of mixing the ingredients of the composition is shown. A person skilled in the art will realize that many other ways (other amount of the different component) of mixing the components are possible.

| Combustion inhibitor | Ammoniumphosphate around 78 wt% |
|---|---|
| | Ammoniumsulphate around 5.5 wt% |
| Thickening agent (only when the composition is applied as roller application) | Around 8 wt% (e.g. CMC, starch, PVAc or PVA) |
| Filler | Around 4.5 wt% |
| Acid (to adjust pH) | Around 1 - 3 wt% |
| Surfactant | Around 1 wt% |

In addition to the above, the composition might also comprise small amount of a preservative and/or a defoamer.

## Claims

1. A flame retardant composition for imparting flame retardancy in absorbent material, comprising:
- At least one combustion inhibitor comprising ammonium phosphate;
- At least one surfactant selected from the group consisting of alcohol, glycol and mixtures thereof;
- A Brønsted acid;
wherein the amount of the at least one surfactant in the composition range from 0.01 to 5 wt%.

2. The composition of claim 1 wherein the at least one combustion inhibitor comprising ammonium phosphate is in the amount of up to 95 wt%.

3. The composition of claim 1 or 2 wherein the composition further comprises a defoamer.

4. The composition of any one of the preceding claims wherein the composition further comprises a thickening agent.

5. The composition of any one of the preceding claims wherein the composition further comprises a filler, e.g. a carbonate.

6. The composition of any one of the preceding claims wherein the composition further comprises a preservative.

7. The composition of any one of the preceding claims wherein the composition is a solid.

8. The composition of any one of the preceding claims wherein the composition is a granulate.

9. The composition of any one of claim 1 to 6 wherein the composition further comprises an aqueous solvent.

10. The composition of any one of the preceding claims wherein the composition has a pH value of below 7.

11. A method of imparting flame retardancy to an absorbent material, comprising applying a composition according to any one of claim 1 to 10, to the absorbent material.

12. The method according to claim 11 wherein the applied composition is the composition according to claim 9 where the composition is applied to the absorbent material by use of roller application.

13. The method according to claim 11 wherein the applied composition is the composition according to claim 9 where the composition is sprayed onto the absorbent material.

14. The method according to claim 11 wherein the composition is added to the absorbent material during the manufacturing of the absorbent material.

15. A fire resistant material comprising the composition according to any one of claim 1 to 10.
